# EUROPEAN PATENT APPLICATION

(11) **EP 2 961 076 A1**
(43) Date of publication of application: **30.12.2015**
(21) Application number: 14306038.2
(22) Date of filing: 27.06.2014
(51) Int. Cl.: H04B 3/46, H04M 3/30

(54) **A device enabling the measurement of the transmission power spectrum density of a transceiver in a DSL system**

(71) Applicant: Orange, 75015 Paris (FR)
(72) Inventor: Obrycka, Joanna, 05-800 Pruszkow (PL); Dabrowski, Kamil, 02-691 Warszawa (PL); Dabrowski, Konrad, 05-555 REMBERTOW (PL); Meus, Piotr Karol, 02-326 Warszawa (PL)
(74) Representative: Regimbeau

(57) **Abstract**

The invention relates to a device enabling the measurement of the transmission power spectrum density of at least one transceiver in a DSL system, said device comprising :
- a first connector comprising an input on which a first transceiver is intended to be connected,
- a second connector comprising an input on which a second transceiver is intended to be connected,
- a line simulator, a first extremity of which being connected to an output of the first connector and a second extremity which being connected to the second connector,
- a third connector comprising an input on which a spectrum analyzer is intended to be connected, and an output of which being connected to a first switch,
- and an impedance intended to be connected to one of the first or second transceiver,

an output of the second connector being connected to a second switch intended to connect, in a first functioning state, the output of the second connector to a second extremity of the line simulator, and in a second functioning state, the output of the second connector to the impedance; and the output of the first connector being connected to the third switch intended to connect, in the second functioning state, the output of the first connector to the output of the third connector.

## Description

The present invention generally relates to xDLS (x Digital Subscriber Line) systems and more particularly to the measuring of the transmission power spectrum density (PSD) masks in such a system.

A power spectrum density mask is a mathematically-defined set of lines applied to the levels of radio transmissions. All the transmission power spectrum density masks of xDSL systems are standardized by ITU-T organization and published in its recommendations (G.990-G.999: Metallic access networks). The power spectrum density mask is generally intended to reduce cross-talk noise and to limit power consumption by limiting excessive radiation at frequencies beyond the necessary bandwidth. Attenuation of these spurious emissions is usually done with a band-pass filter, tuned to allow through the correct center frequency of the carrier wave, as well as all necessary sidebands.

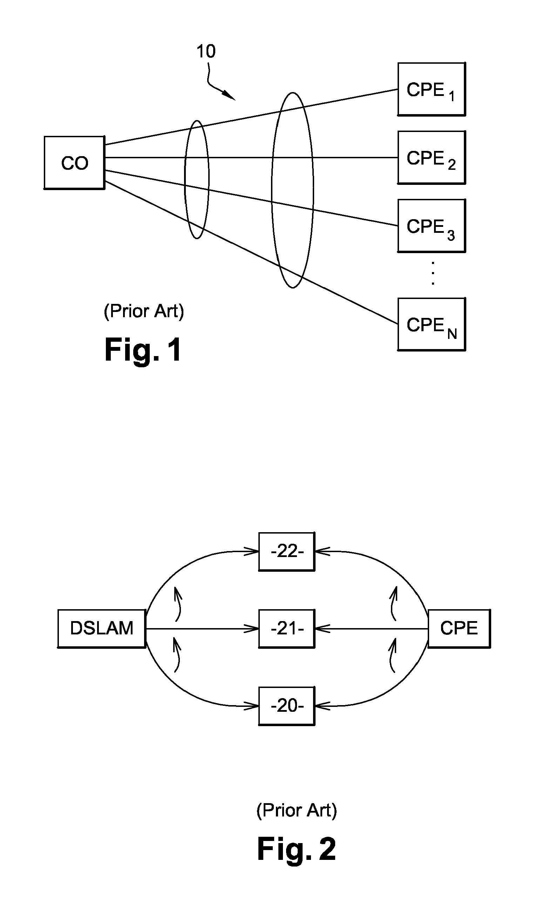

An xDSL system, as represented on **figure 1****,** consists in a central office CO, comprising for example a DSLAM (Digital Subscriber Line Access Multiplexer), connected by a bundle of copper cables 10 connected to a plurality of customer premises equipments CPEᵢ, i ∈ {1, ..., N}.

In order for the xDSL system to work properly, it is desirable that the central office CO and the customer premises equipment CPE have their respective transmissions power spectrum density levels below the scope of the power spectrum density mask.

It is therefore important to measure the transmission power density spectrum of both the central office CO and the customer premises equipment CPE in order to check that these transmission power spectrum density levels are below the standardized power spectrum density mask.

**Figure 2** represents a system used to measure the transmission power spectrum density levels and compare them with the standardized power spectrum density masks.

Such a system comprises a DSLAM connected through a line simulator 20 to a CPE. In order to measure the transmission power spectrum density levels of the DSLAM or of the CPE, the CPE or the DSLAM has to be replaced by an impedance 21 while the measurement is being done. The value of the impedance 21 is equal to the input impedance of the DSLAM or the CPE. The impedance 21 is switched to the line simulator 20 instead of the CPE while the DSLAM transmission power spectrum density level is measured and instead of the DSLAM while the transmission power spectrum density level of the CPE is measured. The impedance 21 avoids a reflection of the DSL signal which may disrupt the measuring of the transmission power spectrum density.

A transmission is initiated between the DSLAM and the CPE. Once the transmission is initiated and a signal is transmitted between the DSLAM and the CPE, the measuring of the transmission power spectrum density levels can be executed.

In order to measure the transmission power spectrum density of the DSLAM, a technician disconnects the CPE from the line simulator 20 and connects the impedance 21 instead. The signal transmitted by the DSLAM is then captured by the spectrum analyzer 22.

Once the CPE is disconnected from the line simulator 20, the DSLAM continues to transmit a signal for a few seconds before cutting the transmission. This is due to the fact that the DSLAM no longer communicates with the CPE.

The same goes for the measuring of the transmission power spectrum density of the CPE. In order to measure the transmission power spectrum density of the CPE, the technician disconnects the DSLAM from the line simulator 20 and connects the impedance 21 instead. The signal transmitted by the CPE is captured by the spectrum analyzer 22. Once the DSLAM is disconnected from the line simulator 20, the CPE continues to transmit a signal for a few seconds before cutting the transmission. This is due to the fact that the CPE no longer communicates with the DLSAM.

Thus the technician only has a few seconds for disconnecting the DSLAM and the CPE from the line simulator 20 and connecting the impedance 21 instead in order to capture the transmission power spectrum density levels.

Such a method is time consuming and has a high probability of mistakes in the measuring of the transmission power spectrum density because the technician has only a few seconds to connect the DSLAM or the CPE to the spectrum analyzer 22, and therefore may have to try several times to capture an exploitable spectrum.

It is an objective of the present invention to overcome disadvantages and/or make improvements in the prior art.

In that respect, the present invention relates to a device enabling the measurement of the transmission power spectrum density of at least one transceiver in a DSL system, said device comprising :
- a first connector comprising an input on which a first transceiver is intended to be connected,
- a second connector comprising an input on which a second transceiver is intended to be connected,
- a line simulator, a first extremity of which being connected to an output of the first connector and a second extremity which being connected to the second connector,
- a third connector comprising an input on which a spectrum analyzer is intended to be connected, and an output of which being connected to a first switch,
- and an impedance intended to be connected to one of the first or second transceiver,
an output of the second connector being connected to a second switch intended to connect, in a first functioning state, the output of the second connector to a second extremity of the line simulator, and in a second functioning state, the output of the second connector to the impedance; and the output of the first connector being connected to the third switch intended to connect, in the second functioning state, the output of the first connector to the output of the third connector.

Such a device allows to automatically measuring the transmission power spectrum density of a transceiver in a DSL system, such as a CPE or a DSLAM.

Indeed, the device according to the invention allows the disconnection of, for example, the DSLAM from the line simulator and connection the impedance instead very quickly and easily by means of a switch.

It is then possible to measure the transmission power density spectrum of the CPE during the few seconds during which the CPE continues to emit before cutting its transmission.

According to a characteristic of the device object of the invention, the output of the first connector is connected to a second switch intended to connect, in a first functioning state, said output of the second connector to the first extremity of the line simulator, and in a second functioning state, said output of the second connector to the impedance.

It is then possible to measure the transmission power spectrum density of two transceivers one after the other. This contributes to reduce the amount of time necessary to validate the transceivers of a DSL system.

An object of the invention is a method for measuring the transmission power spectrum density of at least one transceiver in a DSL system, said method comprising the steps of :
- Initiating a transmission between a first transceiver connected to an input of a first connector and a second transceiver connected to an input of a second connector through a line simulator, an output of the first connector being connected to a first switch and an output of the second connector being connected to a second switch, the first switch and the second switch respectively connecting, in a first functioning state, the output of the first connector to a first extremity of the line simulator and the output of the second connector to a second extremity of the line simulator enabling the transmission between the first and the second transceivers,
- Switching over at least the first switch in a second functioning state wherein the output of the first connector is connected to an impedance intended to minimize reflections of a signal transmitted by the transceiver connected to the second connector.,
- Measuring the transmission power spectrum density of the second transceiver with the spectrum analyzer.

Finally, one object of the invention concerns computer programs, in particular computer programs on or in an information medium or memory, suitable for implementing the methods object of the invention. These programs can use any programming language, and be in the form of source code, binary code, or of code intermediate between source code and object code such as in a partially compiled form, or in any other desirable form for implementing the communication methods according to the invention.

The information medium may be any entity or device capable of storing the programs. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present system and method are explained in further detail, and by way of example, with reference to the accompanying drawings wherein:
**Figure 1** represents a xDSL system of the prior art,
**Figure 2** represents a system used to measure the transmission power spectrum density levels and compare them with the power spectrum density mask in the prior art,
**Figure 3** represents a device enabling the measurement of the transmission power spectrum density of at least one transceiver in a DSL system according to an embodiment of the invention,
**Figure 4** represents the steps of a method for measuring the transmission power spectrum density of at least one transceiver in a DSL system according to the invention:
   A device 10 enabling the measurement of the transmission power spectrum density of at least one transceiver in a DSL system according to an embodiment of the invention is represented in **Figure 3****.**

The device 10 comprises a first connector 11. The connector 11 comprises an input 110 on which a first transceiver, such as a CPE, is intended to be connected, and an output 111.

The device 10 comprises a second connector 12. The connector 12 comprises an input 120 on which a second transceiver is intended to be connected, and an output 121.

The output 111 of the connector 11 is connected to a first switch 13. The switch 13 has two functioning states : a first state in which the switch 13 is connected to a first extremity 150 of a line simulator 15; and a second functioning state in which the switch 13 is connected to an impedance 16. A switch 19 is connected to a spectrum analyzer 17. The impedance 16 may be, for example, a 100 Ω impedance. The impedance 16 avoids the reflection of the DSL signal which may disrupt the measuring of the transmission power spectrum density.

The output 121 of the connector 12 is connected to a second switch 14. The switch 14 also has two functioning states : a first state in which the switch 14 is connected to a second extremity 151 of the line simulator 15; and a second functioning state in which the switch 14 is connected to the impedance 16

In a first functioning mode of the device 11, the switch 13 and the switch 14 are both in the first functioning mode, i.e. the first switch 13 is connected to the first extremity 150 of the line simulator 15 and the second switch 14 is connected to the second extremity 151 of the line simulator 15. In this first functioning mode of the device 11, a transmission is initiated between the DSLAM and the CPE, the signal transmitted between the DSLAM and the CPE through the switches 13 and 14 and the line simulator 15.

In order to measure the transmission power spectrum density of, for example, the DSLAM, the switch 13 switches from its first functioning mode to its second functioning mode. In this second functioning mode, the switch 13 is connected to the impedance 16. The switch 19 is in the first functioning mode and connects the spectrum analyzer 17 to the output 121 of the connector 12.

Once the CPE is disconnected from the line simulator 15, DSLAM continues to transmit a signal for a few seconds before cutting the transmission which enables the spectrum analyzer to measure the transmission power spectrum density of the DSLAM.

In order to measure the transmission power spectrum density of, for example, the CPE, the switch 14 switches from its first functioning mode to its second functioning mode. In this second functioning mode, the switch 14 is connected to the impedance 16. The switch 19 switches to the second functioning mode and connects the spectrum analyzer 17 to the output 111 of the connector 11.Once the DSLAM is disconnected from the line simulator 15, the CPE continues to transmit a signal for a few seconds before cutting the transmission which enables the spectrum analyzer to measure the transmission power spectrum density of the CPE.

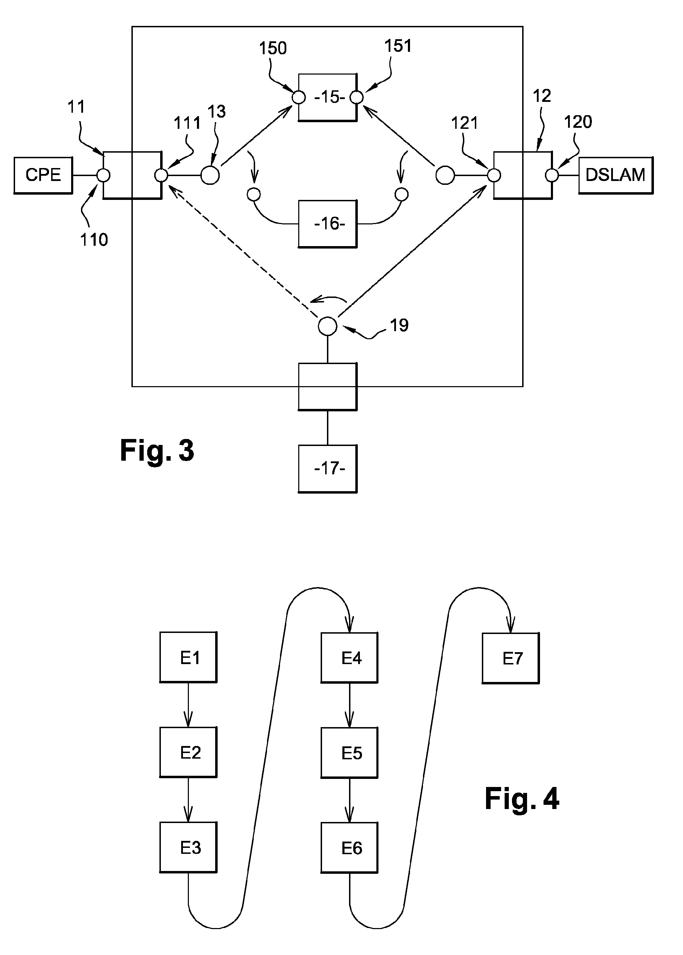

**Figure 4** represents the steps of a method for measuring the transmission power spectrum density of at least one transceiver in a DSL system according to the invention. The method according to the invention is executed in a system comprising a CPE connected to a device 10 enabling the measurement of the transmission power spectrum density of at least one transceiver in a DSL system, a DSLAM connected to the device 10 and a spectrum analyzer also connected to the device 10.

In a step E1, the switch 13 and the switch 14 are switched to their first functioning mode, i.e. the switch 13 is connected to the first extremity 150 of the line simulator 15 and the second switch 14 is connected to the second extremity 151 of the line simulator 15.

In a step E2, a transmission of a signal is initiated between the CPE and the DSLAM. The signal is then transmitted between the CPE and the DSLAM, and vice versa, through the line simulator 15.

In a step E3, the first switch 13 is switched to its second functioning mode. The switch 13 is then connected to the impedance 16. The signal emitted by the DSLAM is now transmitted through the impedance 16. The switch 19 stays in the first functioning mode and connects the spectrum analyzer 17 to the DSLAM.

In a step E4, the spectrum analyzer records the transmission power spectrum of the DSLAM. This spectrum is then analyze by means of algorithms in order to determine if the transmission power spectrum density of the DSLAM is compliant with specifications edited by a telecommunication operator wishing to implement such a DSLAM in its network.

Once the measurement of the transmission power spectrum density of the CPE is done, the switch 13 is switched to its first functioning state, i.e. the switch 13 is connected to the first extremity 150 of the line simulator 15, during a step E5.

In a step E6, the second switch 14 is switched to its second functioning mode. The switch 14 is then connected to the impedance 16. The signal emitted by the CPE is now transmitted through the impedance 16. The switch 19 switches to the second functioning mode and connects the spectrum analyzer 17 to the CPE.

In a step E7, the spectrum analyzer records the transmission power spectrum of the CPE. This spectrum is then analyze by means of algorithms in order to determine if the transmission power spectrum density of the CPE is compliant with specifications edited by a telecommunication operator wishing to implement such a CPE in its network.

## Claims

1. A device enabling the measurement of the transmission power spectrum density of at least one transceiver in a DSL system, said device comprising :
- a first connector comprising an input on which a first transceiver is intended to be connected,
- a second connector comprising an input on which a second transceiver is intended to be connected,
- a line simulator, a first extremity of which being connected to an output of the first connector and a second extremity which being connected to the second connector,
- a third connector comprising an input on which a spectrum analyzer is intended to be connected, and an output of which being connected to a first switch,
- and an impedance intended to be connected to one of the first or second transceiver,
an output of the second connector being connected to a second switch intended to connect, in a first functioning state, the output of the second connector to a second extremity of the line simulator, and in a second functioning state, the output of the second connector to the impedance; and the output of the first connector being connected to the third switch intended to connect, in the second functioning state, the output of the first connector to the output of the third connector.

2. A device enabling the measurement of the transmission power spectrum density of at least one transceiver in a DSL system according to claim 1 wherein the output of the first connector is connected to a second switch intended to connect, in a first functioning state, said output of the second connector to the first extremity of the line simulator, and in a second functioning state, said output of the second connector to the impedance.

3. A method for measuring the transmission power spectrum density of at least one transceiver in a DSL system, said method comprising the steps of :
- Initiating a transmission between a first transceiver connected to an input of a first connector and a second transceiver connected to an input of a second connector through a line simulator, an output of the first connector being connected to a first switch and an output of the second connector being connected to a second switch, the first switch and the second switch respectively connecting, in a first functioning state, the output of the first connector to a first extremity of the line simulator and the output of the second connector to a second extremity of the line simulator enabling the transmission between the first and the second transceivers,
- Switching over at least the first switch in a second functioning state wherein the output of the first connector is connected to an impedance intended to minimize reflections of a signal transmitted by the transceiver connected to the second connector.,
- Measuring the transmission power spectrum density of the second transceiver with the spectrum analyzer.

4. A computer program **characterized in that** it comprises program code instructions for the implementation of the steps of the method for measuring the transmission power spectrum density of at least one transceiver in a DSL system according to claim 1 when the program is executed by a processor.
